# EUROPEAN PATENT SPECIFICATION

(11) **EP 1 440 819 B1**
(45) Date of publication and mention of the grant of the patent: **28.10.2009**
(21) Application number: 03026431.1
(22) Date of filing: 19.11.2003
(51) Int. Cl.: B60B 33/00, B60B 33/02

(54) **Easily assemblable castor wheel for chairs, containers, carriages and the like**
Einfach zusammensetzbare Lenkrolle für Stühle, Behälter, Transportwagen und dergleichen
Roulette pivotante à assemblage facile pour des sièges, récipients, chariots et autres

(30) Priority: 27.01.2003 IT MI20030031 U
(43) Date of publication of application: 28.07.2004
(73) Proprietor: O.G.T.M. Officine Meccaniche S.r.l., 26866 S. Angelo Lodigiano (Lodi) (IT)
(72) Inventor: Trevini, Ruggero c/o O.G.T.M., 26866 S. Angelo Lodigiano (Lodi) (IT)
(74) Representative: Cicogna, Franco

(56) References cited:
- CH-A- 225 129
- DE-A1- 3 741 759
- FR-A- 625 788
- FR-A- 2 552 372
- US-A- 1 871 098

## Description

The present invention relates to an easily assemblable castor wheel for chairs, containers, carriages or trolleys and the like.

As is known, prior castor wheels to be used in chairs, containers, carriages and the like, conventionally comprise a fork-like body, which can be rotatably coupled to a vertically extending pin and each supports a horizontal pin for the wheel.

Great difficulties are practically encountered in assembling the mentioned horizontal pin, since it is necessary to provide a connection which, in addition to being very stable, is also satisfactory from a mere economic standpoint, that is does not comprise any elements susceptible to be seen form the outside.

Prior approaches for solving the above problems are very complex from a constructional standpoint, and, in a lot of cases, do not allow to provide a reliable coupling.

Document CH 225129 discloses substantially the preamble of Claim 1.

### SUMMARY OF THE INVENTION

Accordingly, the aim of the present invention is to overcome the above mentioned drawbacks, by providing a castor wheel construction which allows to connect the wheel horizontal pin in a very simple and quick manner, while providing a very stable and safe connection.

Within the scope of the above mentioned aim, a main object of the present invention is to provide such a castor wheel which comprises braking means which can be easily driven without enlarging the main construction of the castor wheel.

Yet another object of the present invention is to provide such a castor wheel construction which is very reliable and safe in operation.

Yet another object of the present invention is to provide such a castor wheel for chairs, vessels, carriages and the like, adapted to be easily and quickly assembled, which can be easily made starting from easily available elements and materials, and which, moreover, is very competitive from a mere economic standpoint.

According to one aspect of the present invention, the above mentioned aim and objects, as well as yet other objects, which will become more apparent hereinafter, are achieved by an easily assembled castor wheel for chairs, vessels and carriages according to claim 1.

### BRIEF DESCRIPTION OF THE DRAWINGS

Further characteristics and advantages of the present invention will become more apparent hereinafter from the following detailed disclosure of an easily assemblable castor wheel for chairs, containers, carriages and the like, which is illustrated, by way of an indicative, but not limitative, example in the accompanying drawings where:

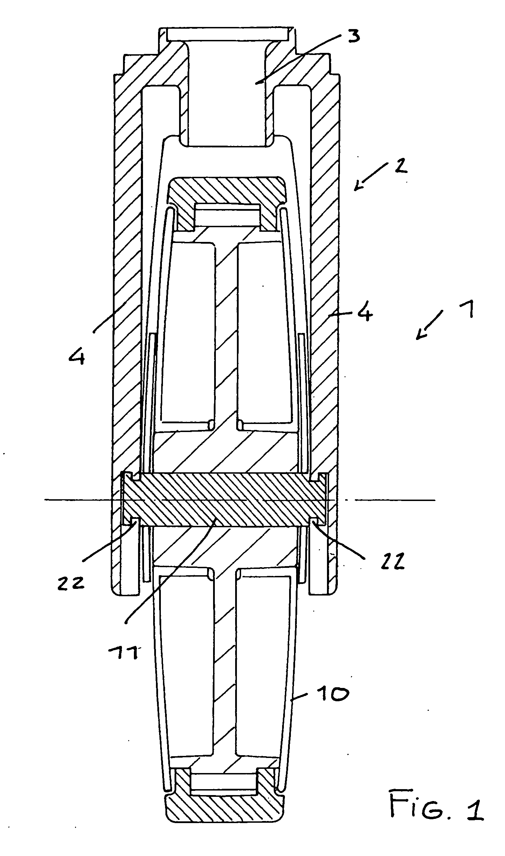

Figure 1 is a schematic diametral cross-section of the castor wheel according to the invention;

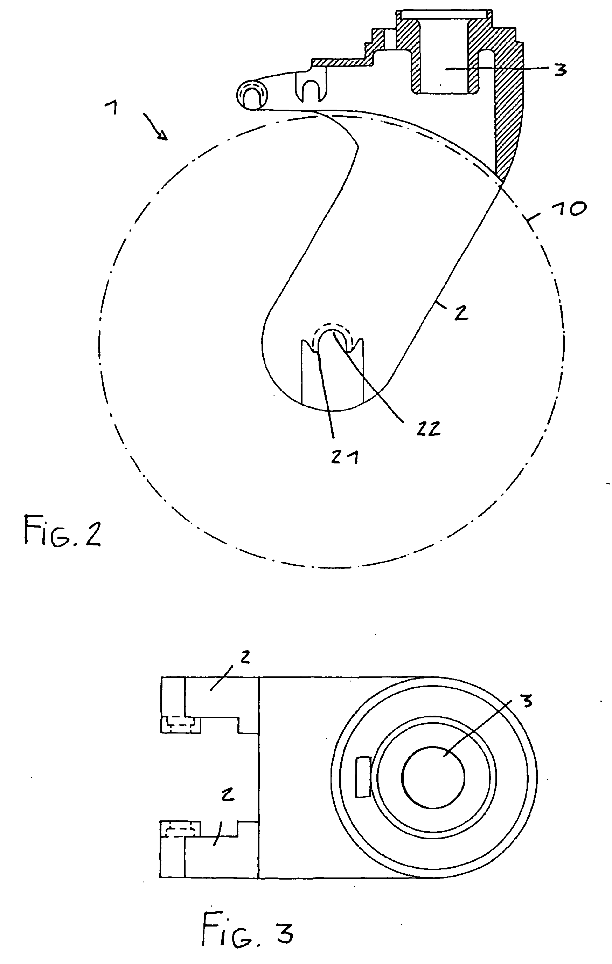

Figure 2 is a partial cross-sectional view illustrating the fork body of the castor wheel according to the invention;
Figure 3 is a top plan view illustrating the above mentioned fork body;
Figure 4 is a further top view illustrating the mentioned fork body as well as locking means for locking any rotary movements at about the vertical pin;
Figure 5 is a front elevation view illustrating the castor wheel according to the present invention;
Figure 6 is a top plan cross-sectioned view, as sectioned at the horizontal pin, of the castor wheel according to the invention; and
Figure 7 is a further cross-sectional view of the castor wheel and the braking means therefor.

### DESCRIPTION OF THE PREFERRED EMBODIMENTS

With reference to the number references of the above mentioned figures, the easily assemblable castor wheel for chairs, containers, carriages and the like, according to the present invention, has been herein generally indicated by the reference number 1 and comprises a fork body 2 defining a vertical seat 3 for engaging therein the conventional vertical pivot pin.

The fork element 2 is provided with opposite arms 4, supporting a wheel 10 which can rotate about a horizontal pin 11.

The main feature of the invention is that the arms 4 of the fork body 2, on their mutually facing surfaces, define recesses 20 which are delimited by lugs 21 which can be engaged in circular milled portions 22, formed near the end portions of the horizontal pin 11.

Thus, after having engaged the lugs 21 in the milled portions 22, it is possible to upset said lugs, thereby providing a firm connection.

Thus, by the above disclosed coupling, the pivot pin can be connected in a very easy manner and, moreover, it will further operate as a joining elements for the arms or legs 4 of the fork body.

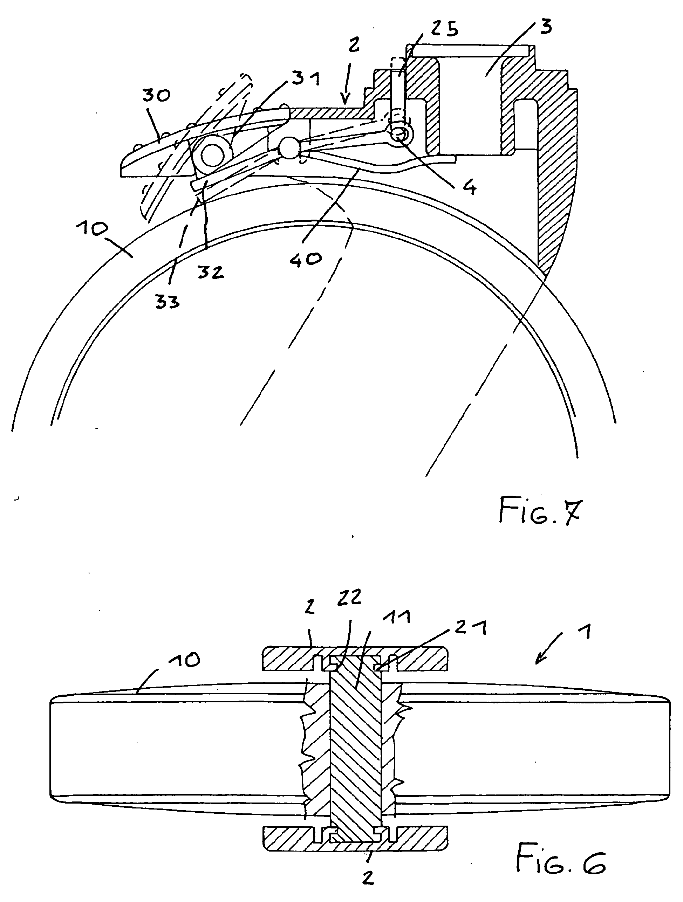

The castor wheel according to the present invention comprises moreover specifically designed braking means, as is clearly shown in figure 7.

Said braking means comprise a driving foot pedal 30, which is swingably mounted above the involved region of the horizontal pivot pin 10 and can in turn be engaged, by its bottom portion 31 of cam shape, with a rocker rod 32, which is rotatably supported by the fork body 2.

More specifically, the rocker rod element 32 has an active end portion 33 which, as the pedal 30 is actuated, engages by contact with the surface of the wheel 10, thereby providing a braking element.

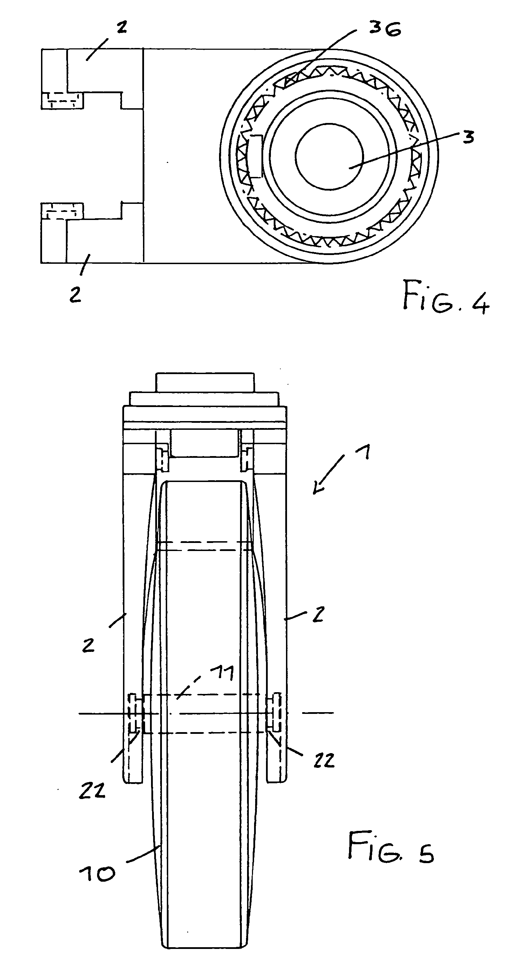

The other end, indicated by 34, engages with a small piston 35 which can be driven in parallel with the direction of the vertical pivot pin and can be meshed with the tooth arrangement 36, schematically shown in figure 4 and coupled to the supporting fixed body.

A spring 40 is moreover provided, for causing the rocker rod 32 to be arranged in two stable positions.

To operate or drive the above mentioned braking means, it is sufficient to operate the pedal 30, swingably mounted on the fork body 2, to bring it to the position indicated by the dashed lines in figure 7.

Under these conditions, the end portion 33 of the rocker rod will engage with the wheel 10 so as to brake it.

In the meanwhile, the other end portion 34 will drive the small piston 35 to provide a locking operation.

In order to unlock the braking means, it will be sufficient to operate the pedal 30 again, to bring it to the position indicated by the solid line.

From the above disclosure it should be apparent that the invention fully achieves the intended aim and objects.

In fact, the invention provides a castor wheel for chairs, containers, carriages and the like, which afford the possibility of greatly simplify the coupling operation for connecting the horizontal pivot pin, by using a single element for joining the arms or legs of the fork-like body.

In practicing the invention, the used materials, provided that they are compatible to the intended application, as well as the contingent size and shapes, can be any, depending on requirements.

## Claims

1. An easily assemblable castor wheel (1) for chairs, vessels and carriages, comprising a fork body (2) supporting a wheel (10) rotatable about a horizontal pin (11), whereby said fork body (2) defines a top vertical seat (3) for rotatably engaging therein a vertical pivot pin of said castor wheel (1), said fork body (2) having opposite fork body arms (4), whereby said fork body (2) comprises recesses (20) delimited by mechanically deformable lugs (21) engageable in circular milled grooves (22) defined at end portions of said horizontal pin (11), **characterized in that** said lugs (21) are adapted to be mechanically deformed after having engaged the lugs (21) in said milled portions (22) to fixedly connect said fork body (2) to said horizontal pin (11), while allowing said horizontal pin (11) to also operate as a joining tie-rod for said arms (4) of said fork body (2).

2. A castor wheel, according to Claim 1, **characterized in that** said recesses (20) are defined on opposite surfaces of said fork body (2) arms (4).

3. A castor wheel (1), according to Claim 1, **characterized in that** said castor wheel (1) further comprises braking means including a rocker rod (32) which is swingably mounted on said fork body (2) and is engageable, at a driving end portion (33) thereof, by a pedal (30) which is swingably mounted on said fork body (2), said driving end portion (33) being engageable with the periphery of the wheel (10).

4. A castor wheel, according to Claims 1 and 3, **characterized in that** said rocker rod (32), at the other end (34) thereof, is engaged with a piston (35) driven in parallel to an axis defined by said vertical pin and adapted to engage with a locking tooth arrangement (36) formed on said fork body (2) .

5. A castor wheel, according to Claim 3, **characterized in that** said rocker rod (32) is urged by a spring (40) operating on said rocker rod (32) to resiliently drive said rocker rod (32) to two positions of stable equilibrium, respectively a position at which said braking means are switched on and a position at which said braking means are switched off.

## Patentansprüche

1. Einfach zusammensetzbare Lenkrolle (1) für Stühle, Behälter und Transportwagen, umfassend einen Gabelkörper (2), der ein Rad (10) um einen waagerechten Stift (11) drehbar hält, wobei der Gabelkörper (2) einen oberen senkrechten Sitz (3) definiert, um darin einen senkrechten Drehzapfen der Lenkrolle (1) drehbar in Eingriff zu bringen, wobei der Gabelkörper (2) gegenüberliegende Gabelkörperarme (4) aufweist, wobei der Gabelkörper (2) Aussparungen (20) umfasst, die durch mechanisch verformbare Ansätze (21) begrenzt sind, welche in runden gefrästen Vertiefungen (22), die an Endabschnitten des waagerechten Stifts (11) in Eingriff gebracht werden können, definiert sind, **dadurch gekennzeichnet, dass** die Ansätze (21) dazu geeignet sind, nach dem Eingriff der Ansätze (21) in den gefrästen Abschnitten (22) mechanisch verformt zu werden, um den Gabelkörper (2) starr mit dem waagerechten Stift (11) zu verbinden, während gestattet wird, dass der waagerechte Stift (11) auch als Verbindungsstange für die Arme (4) des Gabelkörpers (2) wirkt.

2. Lenkrolle nach Anspruch 1, **dadurch gekennzeichnet, dass** die Aussparungen (20) an gegenüberliegenden Flächen der Arme (4) des Gabelkörpers (2) definiert sind.

3. Lenkrolle (1) nach Anspruch 1, **dadurch gekennzeichnet, dass** die Lenkrolle (1) ferner ein Bremsmittel umfasst, das eine Kippstange (32) beinhaltet, die schwingfähig am Gabelkörper (2) angebracht ist und durch ein Pedal (30), das schwingfähig am Gabelkörper (2) angebracht ist, an ihrem Antriebsendabschnitt (33) in Eingriff gebracht werden kann, wobei der Antriebsendabschnitt (33) mit dem Umfang des Rades (10) in Eingriff gebracht werden kann.

4. Lenkrolle nach Anspruch 1 und 3, **dadurch gekennzeichnet, dass** die Kippstange (32) an ihrem.anderen Ende (34) mit einem Kolben (35) in Eingriff gebracht ist, der parallel zu einer Achse, welche durch den senkrechten Stift definiert ist, angetrieben wird und dazu geeignet ist, mit einer am Gabelkörper (2) gebildeten Sperrzahnanordnung (36) einzugreifen.

5. Lenkrolle nach Anspruch 3, **dadurch gekennzeichnet, dass** der Kipphebel (32) durch eine Feder (40) getrieben wird, die auf den Kipphebel (32) wirkt, um den Kipphebel (32) elastisch in zwei Positionen eines stabilen Gleichgewichts, eine Position, in der das Bremsmittel eingeschaltet ist, bzw. eine Position, in der das Bremsmittel ausgeschaltet ist, anzutreiben.

## Revendications

1. Roulette pivotante facilement assemblable (1) destinée à des chaises, des véhicules et des chariots comprenant un corps de fourche (2) supportant une roue (10) qui peut tourner autour d'une broche horizontale (11), grâce à quoi ledit corps de fourche (2) définit un siège vertical supérieur (3) afin d'engager par rotation dans celui-ci une broche de pivotement verticale de ladite roulette pivotante (1), ledit corps de fourche (2) ayant des bras de corps de fourche opposés (4), grâce à quoi ledit corps de fourche (2) comprend des évidements (20) délimités par des languettes déformables mécaniquement (21) qui peuvent s'engager dans des rainures fraisées circulaires (22) définies au niveau de parties d'extrémité de ladite broche horizontale (11), **caractérisé en ce que** lesdites languettes (21) sont conçues pour être déformées mécaniquement après que les languettes (21) ont été engagées dans lesdites parties fraisées (22), afin de raccorder de manière fixe ledit corps de fourche (2) à ladite broche horizontale (11), tout en permettant que ladite broche horizontale (11) fonctionne également comme tirant de jonction pour lesdits bras (4) dudit corps de fourche (2).

2. Roulette pivotante selon la revendication 1, **caractérisée en ce que** lesdits évidements (20) sont définis sur des surfaces opposées desdits bras (4) du corps de fourche (2).

3. Roulette pivotante (1) selon la revendication 1, **caractérisée en ce que** ladite roulette pivotante (1) comprend en outre des moyens de freinage y compris un levier oscillant (32) qui est monté pour basculer sur ledit corps de fourche (2) et sur lequel peut s'engager, au niveau d'une partie d'extrémité d'entraînement (33) de celui-ci, une pédale (30) qui est montée pour basculer sur ledit corps de fourche (2), ladite partie d'extrémité d'entraînement (33) pouvant s'engager sur la périphérie de la roue (10).

4. Roulette pivotante selon les revendications 1 et 3, **caractérisée en ce que**, sur ledit levier oscillant (32), à l'autre extrémité (34) de celle-ci, est engagé un piston (35) entraîné parallèlement à un axe défini par ladite broche verticale et conçu pour s'engager sur un agencement à dents de blocage (36) formé sur ledit corps de fourche (2).

5. Roulette pivotante selon la revendication 3, **caractérisée en ce que** ledit levier oscillant (32) est poussé par un ressort (40) qui fonctionne sur ledit levier oscillant (32) afin d'entraîner de manière élastique ledit levier oscillant (32) vers deux positions d'équilibre stables, respectivement une position dans laquelle lesdits moyens de freinage sont actionnés et une position dans laquelle lesdits moyens de freinage ne sont pas actionnés.
